# FASCICULE DE BREVET EUROPEEN

(11) **EP 3 688 545 B1**
(45) Date de publication et mention de la délivrance du brevet: **14.09.2022**
(21) Numéro de dépôt: 18773227.6
(22) Date de dépôt: 27.09.2018
(51) Int. Cl.: G05D 11/13, B05B 7/14, B05B 7/22, B05B 12/14, B33Y 40/00, B65G 53/56, B22F 10/20

(54) **DISPOSITIF DE DOSAGE D'UNE OU PLUSIEURS POUDRES ET IMPRIMANTE 3D INCLUANT LEDIT DISPOSITIF**
VORRICHTUNG ZUM DOSIEREN VON EINEM ODER MEHREREN PULVERN, UND 3D-DRUCKER MIT DER VORRICHTUNG
DEVICE FOR METERING ONE OR MORE POWDERS AND 3D PRINTER THAT INCLUDES THE SAID DEVICE

(30) Priorité: 29.09.2017 FR 1759070
(43) Date de publication de la demande: 05.08.2020
(73) Titulaire: AddUp, 63118 Cébazat (FR)
(72) Inventeur: SEBAL, Jean-Luc, 46600 Montvalent (FR); CADOUX, Guillaume, 31 200 Toulouse (FR)
(74) Mandataire: Barascou, Frédéric
(86) Numéro de dépôt international: PCT/EP2018/076340
(87) Numéro de publication internationale: WO 2019/063728

(56) Documents cités:
- EP-A1- 2 463 052
- EP-B1- 2 463 052
- WO-A1-2017/019769

## Description

L'invention concerne un dispositif de dosage d'une ou plusieurs poudre(s) pour produire un flux de poudre(s) et d'un gaz vecteur pour une installation d'impression 3D par projection d'au moins une première poudre, ainsi qu'une imprimante 3D intégrant un tel dispositif et un procédé mettant en œuvre ce dispositif.

L'invention concerne par exemple le domaine de la fabrication rapide et la réparation de pièces métalliques tridimensionnelles directement à partir d'une conception assistée par ordinateur. Les procédés de construction additive ou de rechargement par projection de poudre(s) métallique(s), ou encore, en anglais, Laser Métal Déposition (LMD), consistent à fondre une ou plusieurs poudre(s) métallique(s) à l'aide d'un faisceau laser afin de générer un dépôt aux dimensions parfaitement maîtrisées. Les couches de matière sont empilées successivement pour créer des pièces techniques fonctionnelles. Cette méthode de fabrication en impression 3D peut être utilisée dans de nombreux domaines techniques allant de l'automobile à l'aéronautique.

Actuellement, les technologies LMD permettent une économie de matière par rapport à un usinage classique, dans lequel l'enlèvement de matière peut atteindre jusqu'à 80% de la pièce finie. Etant donné le coût des métaux employés dans l'industrie, les industriels recherchent des techniques permettant de faire baisser la consommation de matière. Ainsi, les acteurs de la fabrication additive tentent de réduire la quantité de poudre(s) utilisée, tout en conservant les propriétés mécaniques des pièces produites.

Les dispositifs de dosage de poudre(s) actuels sont généralement situés à l'extérieur de l'enceinte de la machine d'impression 3D pour des raisons d'encombrement, de remplissage et de maintenance. Ils distribuent en continu de la poudre vers une ou plusieurs buse(s) d'injection via un tuyau flexible. La buse d'injection guide la poudre vers le faisceau laser. La poudre est généralement acheminée dans un flux de gaz vecteur, par exemple de l'argon, pour permettre son déplacement.

Actuellement, la distance relativement élevée entre le dispositif de dosage et la ou les buses induit un temps de réponse important entre le départ et l'arrivée de la poudre, environ dix secondes. Ce temps de réponse est préjudiciable au développement de cette technologie, car il empêche de pouvoir arrêter le débit de poudre, de changer de type de poudre instantanément, ou même de moduler le débit de poudre.

Un but de la présente invention est donc de pallier tout ou partie des inconvénients précités, c'est-à-dire en particulier de fournir un dispositif de dosage d'une ou plusieurs poudre(s) permettant de réaliser des pièces à gradient de propriétés.

Parallèlement, on connaît les documents EP 2 463 052 et WO 2017/019769 qui décrivent des dispositifs de dosage d'une ou plusieurs poudres en vue de produire un flux de poudre et d'un gaz vecteur à un débit volumique donné, ces dispositifs comprenant :
- au moins une première source adaptée pour fournir un premier flux comportant une première poudre et un premier gaz vecteur à un débit volumique donné,
- une source d'un gaz vecteur adaptée pour fournir un flux de gaz vecteur d'ajustement,
- une jonction de sortie pour émettre ledit flux de poudre et de gaz vecteur,
- au moins une première vanne proportionnelle comportant une entrée connectée à la première source pour recevoir le premier flux, une première sortie pour envoyer sélectivement un pourcentage X1 volumique du premier flux vers la jonction de sortie, et une deuxième sortie adaptée pour émettre un pourcentage 100-X1 volumique du premier flux,
- une vanne proportionnelle d'ajustement comportant une entrée connectée à ladite source de gaz vecteur par une première canalisation de liaison pour recevoir au moins une fraction du flux de gaz vecteur d'ajustement, une première sortie adaptée pour émettre un pourcentage Y volumique de ladite fraction, et une deuxième sortie adaptée pour émettre un pourcentage 100-Y volumique de ladite fraction,
- un système de pilotage adapté pour piloter au moins la première vanne proportionnelle et la vanne proportionnelle d'ajustement, et configuré pour que le flux de poudre et de gaz vecteur ait un débit volumique sensiblement égal au débit volumique donné,
- au moins un premier système de recyclage pour recycler au moins une partie du premier flux, et
- au moins une première jonction de recyclage reliée, en amont, à la deuxième sortie de la première vanne proportionnelle pour recevoir le pourcentage 1 -X1 du premier flux et à la première sortie de la vanne proportionnelle d'ajustement pour recevoir le pourcentage Y de ladite fraction, et, en aval, à une entrée du premier système de recyclage,
le système de pilotage étant configuré pour que l'entrée du premier système de recyclage reçoive un débit volumique sensiblement égal au débit volumique donné.

Avec les dispositifs de dosage décrits dans les documents EP 2 463 052 et WO 2017/019769, il est possible de rencontrer des problèmes de contre-pression sur la ligne de recyclage qui peuvent nuire au fonctionnement proportionnel de la vanne proportionnelle de dosage de poudre.

Un autre but de la présente invention est de fournir une solution aux problèmes de contre-pression qui peuvent se produire sur la ligne de recyclage d'un dispositif de dosage et qui peuvent nuire au fonctionnement proportionnel de la vanne proportionnelle de dosage de poudre de ce dispositif de dosage.

A cet effet, l'invention a pour objet un dispositif de dosage d'une ou plusieurs poudre(s) pour produire un flux de poudre(s) et d'un gaz vecteur à un débit volumique donné, le dispositif comprenant :
- au moins une première source adaptée pour fournir un premier flux comportant une première poudre et un premier gaz vecteur à un débit volumique sensiblement égal au débit volumique donné,
- une source d'un gaz vecteur adaptée pour fournir un flux de gaz vecteur d'ajustement ayant un débit volumique sensiblement égal au débit volumique donné,
- une jonction sortie pour émettre ledit flux de poudre(s) et de gaz vecteur,
- au moins une première vanne proportionnelle comportant une entrée connectée à la première source pour recevoir le premier flux, une première sortie pour envoyer sélectivement un pourcentage X1 volumique du premier flux vers la jonction de sortie, et une deuxième sortie adaptée pour émettre un pourcentage 100-X1 volumique du premier flux, le pourcentage X1 étant compris entre 0% et 100% et représentatif d'un réglage de la première vanne proportionnelle,
- une vanne proportionnelle d'ajustement comportant une entrée connectée à ladite source de gaz vecteur par une première canalisation de liaison pour recevoir au moins une fraction du flux de gaz vecteur d'ajustement, une première sortie adaptée pour émettre un pourcentage Y volumique de ladite fraction, et une deuxième sortie adaptée pour émettre un pourcentage 100-Y volumique de ladite fraction, le pourcentage Y étant compris entre 0% et 100% et représentatif d'un réglage de la vanne proportionnelle d'ajustement, et
- un système de pilotage adapté pour piloter au moins la première vanne proportionnelle et la vanne proportionnelle d'ajustement, et configuré pour que le flux de poudre(s) et de gaz vecteur ait un débit volumique sensiblement égal au débit volumique donné,
- le dispositif comprenant en outre au moins un premier système de recyclage pour recycler au moins une partie du premier flux, et au moins une première jonction de recyclage reliée, en amont, à la deuxième sortie de la première vanne proportionnelle pour recevoir le pourcentage 1 -X1 du premier flux et à la première sortie de la vanne proportionnelle d'ajustement pour recevoir le pourcentage Y de ladite fraction, et, en aval, à une entrée du premier système de recyclage, le système de pilotage étant configuré pour que l'entrée du premier système de recyclage reçoive un débit volumique sensiblement égal au débit volumique donné.

Selon l'invention, le dispositif de dosage comprend un système d'aspiration et de filtration connecté à une sortie du premier système de recyclage, et un organe de régulation d'une perte de charge entre le premier système de recyclage et le système d'aspiration et de filtration, l'organe de régulation étant adapté pour qu'une pression dans la jonction de sortie et une pression dans la première jonction de recyclage soient sensiblement égales l'une à l'autre.

Avantageusement, en permettant que la pression dans la jonction de sortie et la pression dans la première jonction de recyclage soient sensiblement égales l'une à l'autre, l'organe de régulation permet de garantir l'absence de contre pression sur la ligne de recyclage qui pourrait nuire au fonctionnement proportionnel de la vanne proportionnelle de dosage de poudre.

Selon des modes de réalisation particuliers, le dispositif comprend l'une ou plusieurs des caractéristiques suivantes, prise(s) isolément ou suivant toutes les combinaisons techniquement possibles :
- chacune de la première vanne proportionnelle et de la vanne proportionnelle d'ajustement comporte un diffuseur interne, et un aiguillage mobile en rotation par rapport au diffuseur pour diviser, respectivement le premier flux en le pourcentage X1 et le pourcentage 100-X1, et la fraction du flux de gaz vecteur d'ajustement en le pourcentage Y et le pourcentage 100-Y ;
- la jonction de sortie est en outre reliée à la deuxième sortie de la vanne proportionnelle d'ajustement pour recevoir le pourcentage volumique de ladite fraction, le dispositif étant configuré pour que le pourcentage X1 et le pourcentage Y soient sensiblement égaux l'un à l'autre, et que ladite fraction soit égale à 100% ;
- le dispositif comprend en outre : une deuxième source adaptée pour fournir un deuxième flux comportant une deuxième poudre distincte de la première poudre, et un gaz vecteur à un débit volumique sensiblement égal au débit volumique donné ; et une deuxième vanne proportionnelle comportant une entrée connectée à la deuxième source pour recevoir le deuxième flux, une première sortie adaptée pour envoyer sélectivement un pourcentage X2 volumique du deuxième flux vers la jonction de sortie, et une deuxième sortie (adaptée pour émettre un pourcentage 100-X2 volumique du deuxième flux, le pourcentage X2 étant compris entre 0% et 100% et représentatif d'un réglage de la deuxième vanne proportionnelle, le système de pilotage étant en outre adapté pour piloter la deuxième vanne proportionnelle ;
- le dispositif comprend en outre : un deuxième système de recyclage pour recycler au moins une partie du deuxième flux ; et une deuxième jonction de recyclage reliée, en amont, à la deuxième sortie de la deuxième vanne proportionnelle pour recevoir le pourcentage 100-X2 du deuxième flux et à la deuxième sortie de la vanne proportionnelle d'ajustement pour recevoir la proportion Y de ladite fraction, et, en aval, à une entrée du deuxième système de recyclage, le système de pilotage étant configuré pour que l'entrée du deuxième système de recyclage reçoive un débit volumique sensiblement égal au débit volumique donné ;
- le système de pilotage est configuré pour que le pourcentage Y soit sensiblement égal à la somme des pourcentages X1 et X2, et que ladite fraction soit égale à 100% ; et - le dispositif comprend une deuxième canalisation de liaison reliant la première canalisation de liaison à la jonction de sortie pour délivrer à la jonction de sortie une fraction du flux de gaz vecteur d'ajustement.

L'invention concerne aussi une imprimante 3D par pulvérisation d'une ou plusieurs poudre(s), comprenant un dispositif tel que décrit ci-dessus, et au moins une buse pour éjecter ledit flux de poudre(s) et de gaz vecteur.

L'invention sera mieux comprise à la lecture de la description qui va suivre, donnée uniquement à titre d'exemple et faite en se référant aux dessins annexés, sur lesquels :
- la figure 1 est une représentation schématique d'une imprimante 3D selon l'invention,
- La figure 2 est une représentation schématique d'un dispositif de dosage représenté sur la figure 1, pour doser deux poudres,
- la figure 3 est une autre représentation schématique du dispositif de dosage représenté sur les figures 1 et 2,
- la figure 4 est une représentation plus détaillée, en coupe, de l'une quelconque des vannes proportionnelles du dispositif de dosage représenté sur les figures 1 à 3,
- la figure 5 est une vue en perspective d'un agencement de trois vannes proportionnelles du dispositif de dosage représenté sur les figures 1 à 3, et
- la figure 6 est une représentation schématique d'un dispositif de dosage selon un deuxième mode de réalisation de l'invention, pour produire un flux d'une seule poudre.

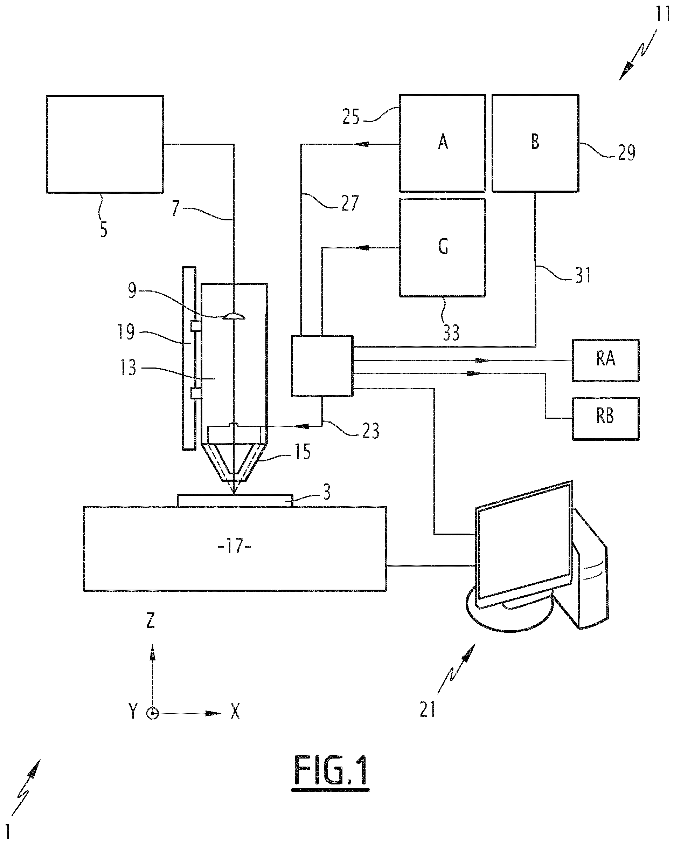

En référence à la figure 1, on décrit une imprimante 3D 1 selon un premier mode de réalisation de l'invention. Dans l'exemple, l'imprimante 1 est adaptée pour fabriquer un objet 3 à partir de deux poudres A et B.

L'imprimante 1 comprend une source laser 5 pour créer un faisceau laser 7, et un système de focalisation 9 pour focaliser le faisceau laser sur l'objet 3. L'imprimante 1 comprend en outre un dispositif 11 de dosage des poudres A et B, et une tête d'impression 13 comportant une buse 15 de pulvérisation d'un flux des poudres A et B et d'un gaz vecteur G. L'imprimante 1 comprend aussi une base de machine 17 adaptée pour porter l'objet 3 et pour être déplacée par exemple selon deux directions X, Y horizontales et perpendiculaires l'une à l'autre, et un actionneur 19 adapté pour déplacer la tête d'impression 13 par rapport à la base de machine 17 selon une direction Z perpendiculaire aux directions X, Y. L'imprimante 1 comporte un système de pilotage 21 appartenant au dispositif 11 de dosage.

Dans l'exemple représenté, le système de focalisation 9 se situe dans la tête d'impression 13.

La base de machine 17 et l'actionneur 19 sont adaptés pour obtenir un déplacement relatif de l'objet 3 par rapport au flux de poudres A et B et au faisceau laser 7.

Selon des variantes non représentées, d'autres moyens de déplacement relatif sont mis en œuvre, notamment pour obtenir des mouvements de rotation de l'objet par rapport aux flux de poudres A et B et/ou au faisceau laser 7.

Les poudres A et B sont avantageusement des poudres métalliques diverses, telles que : les aciers et aciers inoxydables, les alliages métalliques, par exemple à base de nickel, de cobalt, de titane, de cuivre ou d'aluminium, les céramiques, les composés intermétalliques, et aussi les polymères ou autres matériaux composites. Les poudres peuvent être utilisées séparément ou en couches distinctes pour la fabrication de pièces complètes, la réparation de pièces usées, ou le revêtement de surface de pièces, par exemple métalliques. La nature des poudres utilisées varie selon les caractéristiques souhaitées et l'usage de l'objet 3 à fabriquer, de sorte que, selon une variante non représentée, l'imprimante 1 comporte plusieurs dispositifs de dosage de poudre analogues au dispositif 11. Cela permet d'offrir plus de combinaisons de poudres sur une même imprimante 3D mais également d'assurer une continuité d'utilisation lors des opérations de maintenance du dispositif 11.

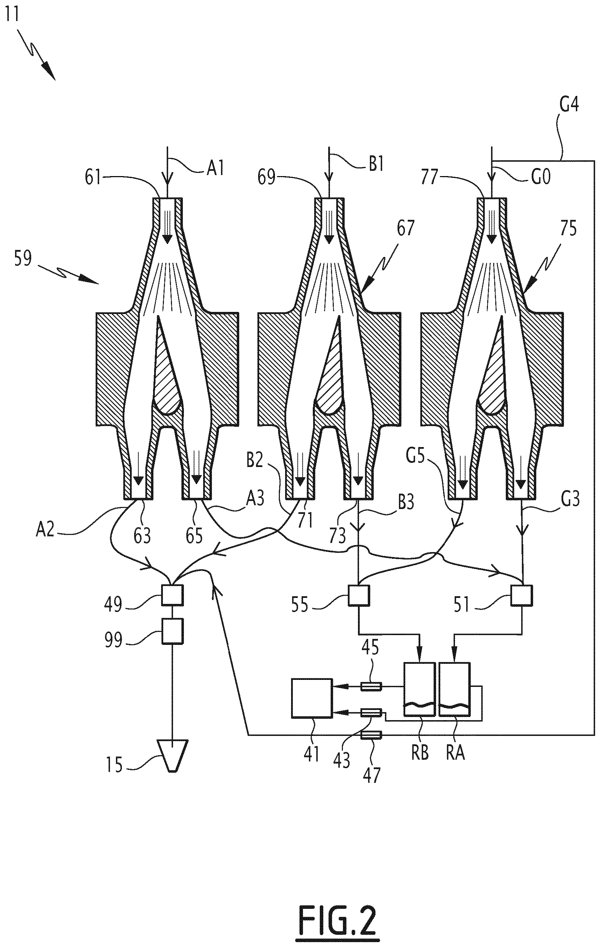

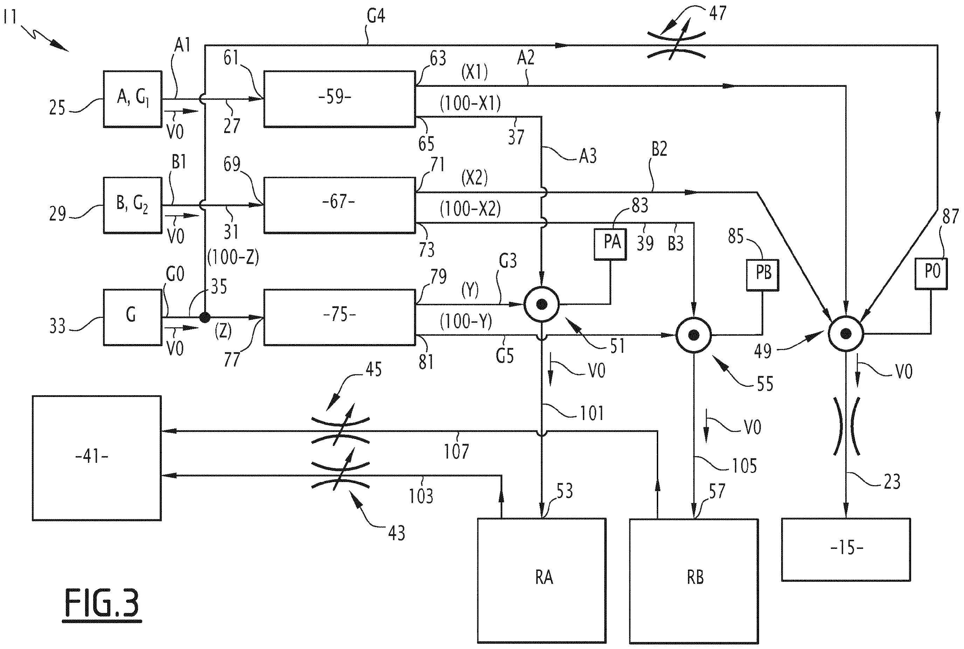

En référence aux figures 2 et 3, le dispositif 11 est adapté pour produire un flux 23 de poudres A et B et du gaz vecteur G à un débit volumique donné VO symbolisé par des flèches sur la figure 3.

Le dispositif 11 comprend une première source 25 adaptée pour fournir un premier flux 27 comportant la première poudre A et un premier gaz vecteur G1 à un débit volumique sensiblement égal au débit volumique donné VO, une deuxième source 29 adaptée pour fournir un deuxième flux 31 comportant la deuxième poudre B et un deuxième gaz vecteur G2 à un débit volumique sensiblement égal au débit volumique donné VO, et une source 33 du gaz vecteur G adaptée pour fournir un flux de gaz vecteur d'ajustement 35 ayant également un débit volumique sensiblement égal au débit volumique donné VO.

Le dispositif 11 comprend avantageusement un premier système de recyclage RA adapté pour recycler au moins une partie 37 du premier flux 27, et un deuxième système de recyclage RB adapté pour recycler au moins une partie 39 du deuxième flux 31.

Le dispositif 11 comprend avantageusement un système d'aspiration et de filtration 41, et des organes de régulation 43, 45, 47 pour réguler différentes pertes de charge.

Le dispositif 11 comprend une jonction de sortie 49 pour émettre le flux 23 de poudres et de gaz vecteur, une première jonction de recyclage 51 reliée en aval à une entrée 53 du premier système de recyclage RA, et une deuxième jonction de recyclage 55 reliée en aval à une entrée 57 du deuxième système de recyclage RB.

Le dispositif 11 comprend également une première vanne proportionnelle 59 comportant une entrée 61 connectée à la première source 25 par un conduit A1 pour recevoir le premier flux 27, une première sortie 63 pour envoyer sélectivement un pourcentage X1 volumique du premier flux 27 vers la jonction de sortie 49 par un conduit A2, et une deuxième sortie 65 adaptée pour émettre un pourcentage 100 - X1 volumique du premier flux 27 par un conduit A3 vers la première jonction de recyclage 51.

Le dispositif 11 comprend aussi, de manière analogue, une deuxième vanne proportionnelle 67 comportant une entrée 69 connectée à la deuxième source 29 par un conduit B1 pour recevoir le deuxième flux 31 , une première sortie 71 adaptée pour relier sélectivement un pourcentage X2 volumique du deuxième flux 31 vers la jonction de sortie 49 par un conduit B2, et une deuxième sortie 73 adaptée pour émettre un pourcentage 100 - X2 volumique du deuxième flux 31 vers la deuxième jonction de recyclage 55 via un conduit B3.

Le dispositif 11 comprend aussi une vanne proportionnelle d'ajustement 75 comportant une entrée 77 connectée à la source 33 de gaz vecteur par une première canalisation de liaison GO pour recevoir une fraction du flux de gaz vecteur d'ajustement 35, une première sortie 79 adaptée pour émettre un pourcentage Y volumique de cette fraction vers la première jonction de recyclage 51 via un conduit G3, et une deuxième sortie 81 adaptée pour émettre un pourcentage 100 - Y volumique de ladite fraction vers la deuxième jonction de recyclage 55 via un conduit G5.

Dans l'exemple représenté, une deuxième canalisation de liaison G4 est embranchée sur la première canalisation de liaison GO pour délivrer à la jonction de sortie 49 la fraction restante du flux de gaz vecteur d'ajustement 35.

Les gaz vecteurs G, G1, G2 sont avantageusement de même nature, et sont par exemple de l'argon.

Le débit volumique donné VO est avantageusement compris entre 0,5 et 100 I/mn, de préférence entre 1 et 10 I/mn. VO vaut par exemple environ 3 l/mn (où « l » signifie « litre »).

L'organe de régulation 43 est situé entre le premier système de recyclage RA et le système d'aspiration et de filtration 41 pour réguler une pression PA régnant dans la première jonction de recyclage 51 et mesurée par un pressostat 83.

L'organe de régulation 45 est situé entre le deuxième système de recyclage RB et le système d'aspiration et de filtration 41 pour réguler une pression PB régnant dans la deuxième jonction de recyclage 55 et mesurée à l'aide d'un pressostat 85.

L'organe de régulation 47 est situé dans la deuxième canalisation de liaison G4 et permet de régler un pourcentage volumique Z du flux de gaz vecteur d'ajustement 35 arrivant à l'entrée 77 de la vanne proportionnelle d'ajustement 75, et un pourcentage volumique 100 - Z du flux de gaz vecteur d'ajustement empruntant la deuxième canalisation de liaison G4 vers la jonction de sortie 49.

Les pourcentages volumiques X1, X2 et Y sont représentatifs respectivement de réglages de la première vanne proportionnelle 59, de la deuxième vanne proportionnelle 67 et de la vanne proportionnelle d'ajustement 75. Les pourcentages X1, X2 et Y peuvent avantageusement varier de 0% à 100% inclus.

Les organes de régulation 43, 45, 47 sont adaptés pour qu'une pression de sortie PO dans la jonction de sortie 49, la pression PA de la première jonction de recyclage 51 et la pression PB de la deuxième jonction de recyclage 55 soient sensiblement égales entre elles.

Par « sensiblement égales », on entend ici, par exemple, qu'elles diffèrent de moins de 5 % les unes des autres, afin de garantir l'absence de contre pression sur une ou plusieurs lignes de recyclage qui pourraient nuire au fonctionnement proportionnel des vannes proportionnelles de dosage des poudres.

Les organes de régulation 43, 45, 47 sont par exemple des robinets.

Le système de pilotage 21 est adapté pour piloter la première vanne proportionnelle 59, la deuxième vanne proportionnelle 67, la vanne proportionnelle d'ajustement 75 et avantageusement l'organe de régulation 47 pour que le flux 23 de poudres et de gaz vecteur ait un débit volumique sensiblement égal au débit volumique donné V0.

Un pressostat 87 permet de mesurer la pression de sortie PO dans la jonction de sortie 49.

La première vanne proportionnelle 59, la deuxième vanne proportionnelle 67 et la vanne proportionnelle d'ajustement 75 sont avantageusement analogues entre elles structurellement. Aussi, seule la première vanne proportionnelle 59 sera décrite ci-après.

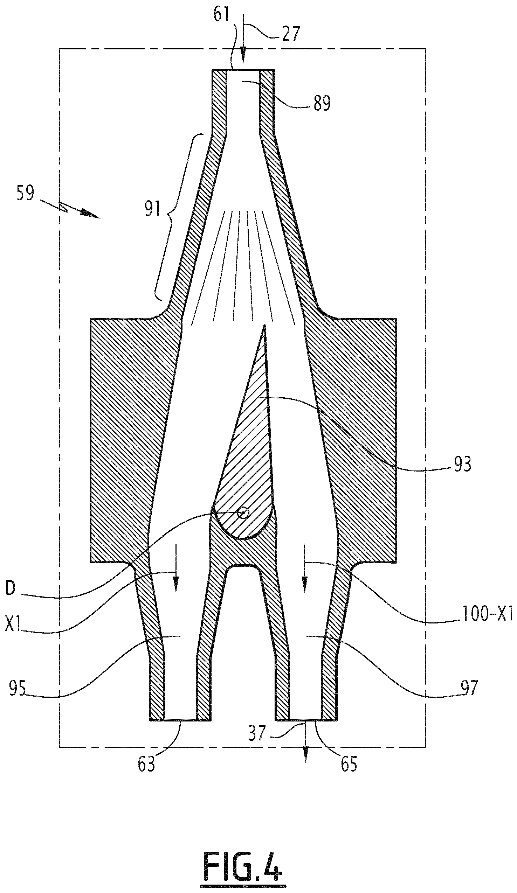

Comme visible sur la figure 4, la première vanne proportionnelle 59 comporte un tuyau d'arrivée 89 formant l'entrée 61 reliée à la première source 25, un diffuseur interne 91 adapté pour assurer une répartition homogène du premier flux 27, un aiguillage 93 monté mobile en rotation par rapport au diffuseur autour d'un axe D de manière à séparer le premier flux 27 en, d'une part, le pourcentage X1 volumique, et, d'autre part, le pourcentage 100 - X1 respectivement dans deux veines de circulation 95, 97 définissant respectivement la première sortie 63 et la deuxième sortie 65.

Ainsi, à une position angulaire de l'aiguillage 93 autour de l'axe D par rapport au diffuseur 91 correspond une valeur du pourcentage X1 représentative du réglage de la première vanne proportionnelle 59.

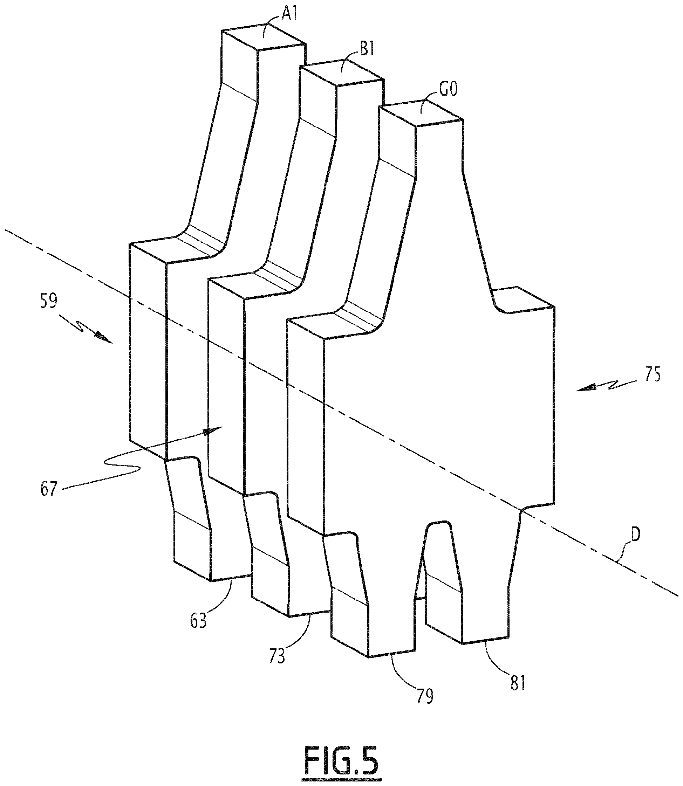

Selon un mode de réalisation particulier représenté sur la figure 5, la première vanne proportionnelle 59, la deuxième vanne proportionnelle 67 et la vanne proportionnelle de l'ajustement 75 sont disposées côte à côte de manière à rendre les mouvements des aiguillages 93 coaxiaux. Ceci permet de réaliser un couplage mécanique de deux des aiguillages 93 entre eux, dont l'intérêt sera précisé plus tard.

Le fonctionnement de l'imprimante 3D 1 va maintenant être décrit.

Comme visible sur la figure 1, la source laser 5 produit un faisceau laser 7 qui est focalisé par le système de focalisation 9 sur l'objet 3 en train d'être fabriqué.

Concomitamment, le dispositif 11 produit le flux 23 de poudres et de gaz vecteur au débit volumique donné VO. Ce flux 23 est pulvérisé par la buse 15 sur l'objet 3. Ceci dépose sur l'objet 3 les poudres A et B, que le faisceau laser 7 fait fondre.

Le système de pilotage 21 commande la base de machine 17 en déplacement en translation selon les axes X, Y, et l'actionneur 19 pour déplacer la tête d'impression 13 en translation selon l'axe Z pour réaliser le dépôt des poudres A et B aux endroits voulus.

La figure 3 illustre la préparation du flux 23 de poudres et de gaz vecteur.

La première source 25 produit le premier flux 27 à un débit volumique égal au débit volumique donné VO. Le premier flux 27 emprunte le conduit A1 et entre dans la première vanne proportionnelle 59 par l'entrée 61. La première vanne proportionnelle 59 divise le premier flux 27 en deux fractions. Une première fraction, correspondant au pourcentage X1, est émise par la première sortie 63 et emprunte le conduit A2 jusqu'à la jonction de sortie 49. L'autre fraction, correspondant au pourcentage volumique 100 - X1, est émise par la deuxième sortie 65 et emprunte le conduit A3 jusqu'à la première jonction de recyclage 51.

De manière analogue, la deuxième source 29 produit le deuxième flux 31 à un débit volumique égal au débit volumique donné VO. Le deuxième flux 31 emprunte le conduit B1 et arrive à l'entrée 69 de la deuxième vanne proportionnelle 67. La deuxième vanne proportionnelle 67 divise le deuxième flux 31 en deux fractions. L'une de ces fractions, correspondant au pourcentage volumique X2, sort par la première sortie 71, emprunte le conduit B2, et arrive à la jonction de sortie 49. L'autre fraction, correspondant au pourcentage volumique 100 - X2, est émise par la deuxième sortie 73 et emprunte le conduit B3 jusqu'à la deuxième jonction de recyclage 55.

La source 33 de gaz vecteur produit le flux de gaz vecteur d'ajustement 35, également à un débit volumique VO. Un pourcentage de liaison volumique Z du flux de gaz vecteur d'ajustement 35 emprunte la première canalisation de liaison G0 jusqu'à l'entrée 77 de la vanne proportionnelle d'ajustement 75. La fraction restante, correspondant à un pourcentage volumique 100 - Z, emprunte la deuxième canalisation de liaison G4, et traverse l'organe de régulation 47 pour arriver à la jonction de sortie 49. La fraction du flux de gaz vecteur d'ajustement 35 entrée dans la vanne proportionnelle d'ajustement 75 est elle-même divisée en deux fractions. Une première fraction, correspondant au pourcentage volumique Y, est émise par la première sortie 79 et arrive à la première jonction de recyclage 51 par le conduit G3. L'autre fraction, correspondant à un pourcentage volumique 100 - Y, est émise par la deuxième sortie 81 et arrive à la deuxième jonction de recyclage 55 par le conduit G5.

La fraction du premier flux 27 empruntant le conduit A2, la fraction du deuxième flux 31 empruntant le conduit B2 et la fraction éventuelle de gaz vecteur empruntant le conduit G4 se mélangent dans la jonction de sortie 49 pour former le flux 23 de poudres et de gaz vecteur. Optionnellement, un organe mélangeur 99 (figure 2) est ajouté entre la jonction de sortie 49 et la buse 15 pour améliorer le degré d'homogénéité du flux 23.

Le système de pilotage 21 ajuste en permanence le pourcentage volumique X1 , le pourcentage volumique X2 et le cas échéant l'organe de réglage 47 déterminant le pourcentage volumique 100 - Z pour que le flux 23 de poudres et de gaz vecteur ait un débit volumique sensiblement égal au débit volumique donné V0. Le débit volumique du flux 23 étant fixé, et les pertes de charge en aval de la jonction de sortie 49 étant donc sensiblement constantes, ceci détermine la pression PO régnant dans la jonction de sortie 49.

La fraction 37 du premier flux 27 empruntant le conduit A3 et la fraction de gaz vecteur empruntant le conduit G3 se mélangent dans la première jonction de recyclage 51 pour former un flux 101 qui entre dans le premier système de recyclage RA par l'entrée 53. Le premier système de recyclage RA récupère au moins une fraction de la poudre A présente dans le flux 101 et envoie un flux résiduel 103 vers le système d'aspiration et de filtration 41. La poudre A ainsi récupérée est avantageusement réutilisée dans l'imprimante 3D 1 ou dans une autre.

Le système de pilotage 21 commande la vanne proportionnelle d'ajustement 75 de sorte que le pourcentage volumique Y soit tel que le flux 101 ait un débit volumique sensiblement égal au débit volumique V0. En outre, le système de pilotage 21 commande l'organe de régulation 43 de sorte que la pression PA régnant dans la première jonction de recyclage 51 soit sensiblement égale à la pression PO de la jonction de sortie 49. Ainsi, la première vanne proportionnelle 59 est connectée en aval à la jonction de sortie 49 et à la première jonction de recyclage 51 qui sont toutes deux à la même pression.

De manière analogue, la fraction du deuxième flux 31 empruntant le conduit B3 et la fraction du gaz vecteur G empruntant le conduit G5 se mélangent dans la deuxième jonction de recyclage 55 pour former un flux 105 entrant dans le deuxième système de recyclage RB par l'entrée 57. Le deuxième système de recyclage RB récupère au moins une fraction de la poudre B présente dans le flux 105 et émet un flux résiduel 107 vers le système d'aspiration et de filtration 41.

Le système de pilotage 21 contrôle la deuxième vanne proportionnelle 67 et la vanne proportionnelle d'ajustement 75 pour que le flux 105 ait un débit volumique sensiblement égal au débit volumique V0. En outre, le système de pilotage 21 contrôle l'organe de régulation 45 de sorte que la pression PB régnant dans la deuxième jonction de recyclage 55 soit sensiblement égale à la pression PO. Ainsi, la deuxième vanne proportionnelle 67 et la vanne proportionnelle d'ajustement 75 sont connectées en aval à des jonctions présentant sensiblement les mêmes pressions.

Ainsi, les réglages de la première vanne proportionnelle 59 et de la deuxième vanne proportionnelle 67 sont, dans le cas le plus général, indépendants l'un de l'autre et il est ainsi possible de choisir la quantité de poudre A et la quantité de poudre B dans le flux 23, en choisissant les pourcentages volumiques X1 et X2 indépendamment l'un de l'autre. L'organe de régulation 47 est commandé pour amener à la jonction de sortie 49 une quantité de gaz vecteur complémentaire nécessaire pour que le flux 23 ait un débit volumique toujours égal au débit volumique donné V0.

Ceci permet de moduler la proportion des poudres A et B dans le flux 23, ainsi que leur quantité totale.

Selon un mode de fonctionnement un peu plus simple, le flux de gaz vecteur empruntant la deuxième canalisation de liaison G4 est fixé, par exemple en fermant totalement l'organe de réglage 47. Dans ces conditions, la première vanne proportionnelle 59 et la deuxième vanne proportionnelle 67 sont commandées de manière synchrone et on joue sur la proportion des poudres A et B dans le flux 23, mais pas sur la quantité totale des poudres dans ce flux. Dans ce mode de fonctionnement, il est possible de lier mécaniquement les aiguillages 93 de la première vanne proportionnelle 59, de la deuxième vanne proportionnelle 67, et éventuellement de la troisième vanne proportionnelle 75 grâce à la configuration montrée sur la figure 5.

Lorsque l'organe de régulation 47 est totalement fermé, on a la relation X1 + X2 = 100%. A titre d'exemple, la première vanne proportionnelle 59 est réglée pour envoyer 33% du premier flux 27 de poudre A vers la buse 15 et 67% vers le premier système de recyclage RA. L'aiguillage 93 de la deuxième vanne proportionnelle 67 est alors réglé pour envoyer 67% du deuxième flux 31 vers la buse 15, et 33% vers le deuxième système de recyclage RB. On a alors X1 = 33% et X2 = 67%, avec X1 + X2 = 100%.

La vanne proportionnelle d'ajustement 75 répartit par exemple un pourcentage Y de 33% volumique du flux de gaz vecteur d'ajustement 35 dans le conduit G3, et d'autre un pourcentage 1 -Y de 67% volumique du flux de gaz vecteur d'ajustement dans le conduit G5. Ainsi, les débits et les pressions en sortie des points 51 et 55 soient sensiblement identiques au débit VO et à la pression PO de sortie du point 49,

Selon un mode particulier non représenté, le dispositif 11 ne comprend pas la deuxième canalisation de liaison G4, ni l'organe de régulation 47, ce qui revient dans le premier mode de réalisation ci-dessus à fermer totalement l'organe de régulation 47.

Comme on l'aura compris, dans tous les cas, les réglages des vannes proportionnelles ne déstabilisent pas les pressions PA, PB et PO, car les débits volumiques restent constants en aval de la jonction de sortie 49 de la première jonction de recyclage 51 et de la deuxième jonction de recyclage 55. Le dispositif 11 reste donc équilibré en pression.

En maintenant un débit volumique constant dans le premier système de recyclage RA et dans le deuxième système de recyclage RB, on évite le bouchage des tuyaux par des dépôts de poudre.

Grâce à la deuxième canalisation de liaison G4 optionnelle et à l'organe de réglage 47, il est en outre possible de moduler la quantité totale de poudres A et B.

La possibilité de couper rapidement le débit de poudre permet d'économiser 20 à 40% de la quantité de poudre pulvérisée.

Grâce aux caractéristiques ci-dessus, il est possible de doser les poudres A et B avec un temps de réponse très court.

Ceci permet en outre d'arrêter la pulvérisation de poudre entre deux déplacements de l'objet 3 sans tir laser. Il suffit que X1 = 0% et X2 = 0%.

Il est également possible de changer de type de poudre quasi-instantanément, par exemple en passant de X1 = 100% et X2 = 0%, à X1 = 0% et X2 = 100%, en synchronisant les vannes proportionnelles.

On peut ainsi réaliser des pièces à gradient de propriétés, en modulant la quantité des poudres A et B selon l'endroit dans l'objet 3.

De manière avantageuse, on obtient la relation X1 + X2 = 100% en liant mécaniquement les aiguillages 93 de la première vanne proportionnelle 59 et de la deuxième vanne proportionnelle 67.

Les vannes proportionnelles 59, 67, 75 et les organes de réglage 47, 43 et 45 sont avantageusement à commande numérique.

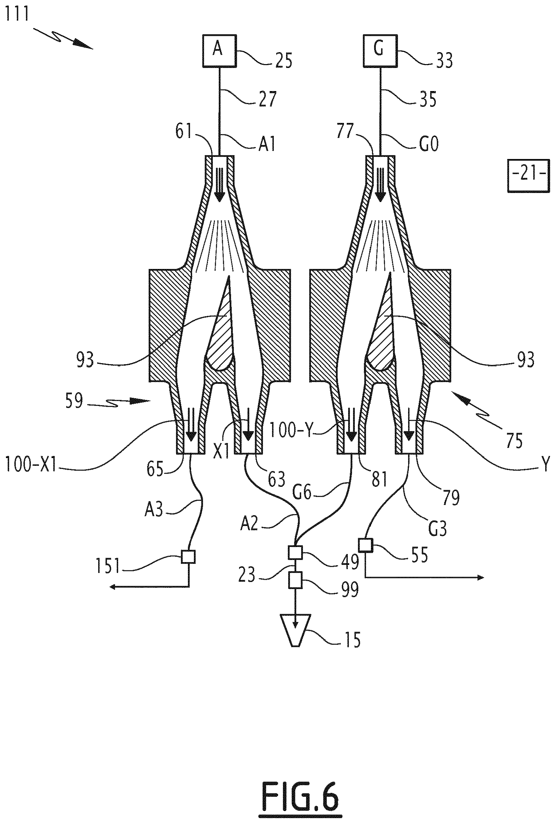

On va maintenant décrire un dispositif 111 en référence à la figure 6, constituant un deuxième mode de réalisation de l'invention. Le dispositif 111 est analogue au dispositif 11 représenté sur les figures 1 à 3. Les éléments similaires portent les mêmes références numériques et ne seront pas décrits à nouveau. Seules les différences seront décrites en détail ci-après.

Le dispositif 111 ne comprend pas la deuxième source 29 de poudre B. Le système 111 ne comporte pas non plus dans cet exemple de système RB de recyclage de la poudre B.

La jonction de sortie 49 est toujours reliée par le conduit A2 à la première sortie 63 de la première vanne proportionnelle 59 et est également reliée par un conduit G6 à la deuxième sortie 81 de la vanne proportionnelle d'ajustement 75.

La deuxième sortie 65 de la première vanne proportionnelle 59 est reliée à une sortie 151 pour évacuer la fraction du flux 27 correspondant au pourcentage volumique 100 - X1 . De même, la première sortie 79 de la vanne proportionnelle d'ajustement 75 est reliée par le conduit G3 à une sortie 155 pour évacuer la fraction du flux de gaz vecteur d'ajustement 35 correspondant au pourcentage volumique Y.

Le système de pilotage 21 commande la première vanne proportionnelle 59 et la vanne proportionnelle d'ajustement 75 pour que le débit volumique du flux 23 soit sensiblement égal au débit volumique donné VO. Dans le cas présent, ceci s'obtient en réglant les deux vannes proportionnelles de telle manière que les pourcentages X1 et Y soient sensiblement égaux l'un à l'autre.

Il est alors possible de coupler mécaniquement les aiguillages 93 de la première vanne proportionnelle 59 et de la vanne proportionnelle d'ajustement 75, par exemple en les rendant coaxiaux comme représenté sur la figure 5.

Grâce aux caractéristiques décrites ci-dessus, le dispositif 111 permet de moduler la quantité de poudre A dans le flux 23.

## Revendications

1. - Dispositif (11 ; 111 ) de dosage d'une ou plusieurs poudre(s) (A, B) pour produire un flux (23) de poudre(s) et d'un gaz vecteur à un débit volumique donné (VO), le dispositif (11 ; 111 ) comprenant :
- au moins une première source (25) adaptée pour fournir un premier flux (27) comportant une première poudre (A) et un premier gaz vecteur (G1 ) à un débit volumique sensiblement égal au débit volumique donné (VO),
- une source (33) d'un gaz vecteur adaptée pour fournir un flux de gaz vecteur d'ajustement (35) ayant un débit volumique sensiblement égal au débit volumique donné (VO),
- une jonction de sortie (49) pour émettre ledit flux (23) de poudre(s) et de gaz vecteur,
- au moins une première vanne proportionnelle (59) comportant une entrée (61 ) connectée à la première source (25) pour recevoir le premier flux (27), une première sortie (63) pour envoyer sélectivement un pourcentage X1 volumique du premier flux (27) vers la jonction de sortie (49), et une deuxième sortie (65) adaptée pour émettre un pourcentage 100-X1 volumique du premier flux (27), le pourcentage X1 étant compris entre 0% et 100% et représentatif d'un réglage de la première vanne proportionnelle (59),
- une vanne proportionnelle d'ajustement (75) comportant une entrée (77) connectée à ladite source (33) de gaz vecteur par une première canalisation de liaison (G0) pour recevoir au moins une fraction du flux de gaz vecteur d'ajustement (35), une première sortie (79) adaptée pour émettre un pourcentage Y volumique de ladite fraction, et une deuxième sortie (81 ) adaptée pour émettre un pourcentage 100-Y volumique de ladite fraction, le pourcentage Y étant compris entre 0% et 100% et représentatif d'un réglage de la vanne proportionnelle d'ajustement (59), et
- un système de pilotage (21 ) adapté pour piloter au moins la première vanne proportionnelle (59) et la vanne proportionnelle d'ajustement (75), et configuré pour que le flux (23) de poudre(s) et de gaz vecteur ait un débit volumique sensiblement égal au débit volumique donné (VO), le dispositif (11 ; 111 ) comprenant en outre :
- au moins un premier système de recyclage (RA) pour recycler au moins une partie du premier flux (27), et
- au moins une première jonction de recyclage (51 ) reliée, en amont, à la deuxième sortie (65) de la première vanne proportionnelle (59) pour recevoir le pourcentage 1 -X1 du premier flux (27) et à la première sortie (79) de la vanne proportionnelle d'ajustement (75) pour recevoir le pourcentage Y de ladite fraction, et, en aval, à une entrée (53) du premier système de recyclage (RA),
le système de pilotage (21 ) étant configuré pour que l'entrée (53) du premier système de recyclage (RA) reçoive un débit volumique sensiblement égal au débit volumique donné (VO),
et le dispositif (11 ; 111 ) étant **caractérisé en ce qu'**il comprend un système d'aspiration et de filtration (41 ) connecté à une sortie du premier système de recyclage (RA), et un organe de régulation (43) d'une perte de charge entre le premier système de recyclage (RA) et le système d'aspiration et de filtration (41 ),
l'organe de régulation (43) étant adapté pour qu'une pression (PO) dans la jonction de sortie (49) et une pression (PA) dans la première jonction de recyclage (51 ) soient sensiblement égales l'une à l'autre.

2. - Dispositif (11 ; 111 ) selon la revendication 1, dans lequel chacune de la première vanne proportionnelle (59) et de la vanne proportionnelle d'ajustement (75) comporte un diffuseur interne (91 ), et un aiguillage (93) mobile en rotation par rapport au diffuseur (91 ) pour diviser, respectivement :
- le premier flux (27) en le pourcentage X1 et le pourcentage 100-X1 , et
- la fraction du flux de gaz vecteur d'ajustement (35) en le pourcentage Y et le pourcentage 100-Y.

3. - Dispositif (111 ) selon l'une des revendications 1 ou 2, dans lequel la jonction de sortie (49) est en outre reliée à la deuxième sortie (81 ) de la vanne proportionnelle d'ajustement (75) pour recevoir le pourcentage (100-Y) volumique de ladite fraction,
le dispositif (11 ; 111 ) étant configuré pour que le pourcentage X1 et le pourcentage Y soient sensiblement égaux l'un à l'autre, et que ladite fraction soit égale à 100%.

4. - Dispositif (11 ; 111 ) selon l'une quelconque des revendications 1 à 3, comprenant en outre :
- une deuxième source (29) adaptée pour fournir un deuxième flux (31 ) comportant une deuxième poudre (B) distincte de la première poudre (A), et un gaz vecteur (G2) à un débit volumique sensiblement égal au débit volumique donné (67), et
- une deuxième vanne proportionnelle (67) comportant une entrée connectée (69) à la deuxième source (29) pour recevoir le deuxième flux (31 ), une première sortie adaptée (71 ) pour envoyer sélectivement un pourcentage X2 volumique du deuxième flux (31 ) vers la jonction de sortie (49), et une deuxième sortie (73) adaptée pour émettre un pourcentage 100-X2 volumique du deuxième flux (31 ), le pourcentage X2 étant compris entre 0% et 100% et représentatif d'un réglage de la deuxième vanne proportionnelle (67),
le système de pilotage (21 ) étant en outre adapté pour piloter la deuxième vanne proportionnelle (67).

5. - Dispositif (11 ; 111 ) selon la revendication 4, comprenant en outre :
- un deuxième système de recyclage (RB) pour recycler au moins une partie du deuxième flux (31 ), et
- une deuxième jonction de recyclage (55) reliée, en amont, à la deuxième sortie (73) de la deuxième vanne proportionnelle (67) pour recevoir le pourcentage 100-X2 du deuxième flux 31 ) et à la deuxième sortie de (81 ) la vanne proportionnelle d'ajustement (75) pour recevoir la proportion Y de ladite fraction, et, en aval, à une entrée (57) du deuxième système de recyclage (RB),
le système de pilotage (21 ) étant configuré pour que l'entrée (57) du deuxième système de recyclage (RB) reçoive un débit volumique sensiblement égal au débit volumique donné (V0).

6. - Dispositif (11 ; 111 ) selon la revendication 5, dans lequel le système de pilotage (21 ) est configuré pour que le pourcentage Y soit sensiblement égal à la somme des pourcentages X1 et X2, et que ladite fraction soit égale à 100%.

7. - Dispositif (11 ; 111 ) selon l'une quelconque des revendications 1 à 2, 4 et 5, comprenant une deuxième canalisation (G4) de liaison reliant la première canalisation de liaison (G0) à la jonction de sortie (49) pour délivrer à la jonction de sortie (49) une fraction du flux de gaz vecteur d'ajustement (35).

8. - Imprimante 3D (1 ) par pulvérisation d'une ou plusieurs poudre(s) (A, B), comprenant :
- un dispositif (11 ; 111 ) selon l'une des revendications 1 à 7, et
- au moins une buse (15) pour éjecter ledit flux (23) de poudre(s) et de gaz vecteur.

## Patentansprüche

1. Vorrichtung (11; 111) zum Dosieren eines oder mehrerer Pulver (A, B), um einen Strom (23) aus Pulver(n) und einem Trägergas mit einem gegebenen Volumenstrom (V0) zu erzeugen, wobei die Vorrichtung (11; 111) umfasst:
- mindestens eine erste Quelle (25), die geeignet ist, einen ersten Strom (27), der ein erstes Pulver (A) und ein erstes Trägergas (G1) beinhaltet, mit einem Volumenstrom von im Wesentlichen gleich dem gegebenen Volumenstrom (V0) abzugeben,
- eine Quelle (33) eines Trägergases, die geeignet ist, einen Anpassungsträgergasstrom (35) mit einem Volumenstrom von im Wesentlichen gleich dem gegebenen Volumenstrom (V0) abzugeben,
- eine Ausgangsverbindung (49), um den Strom (23) aus Pulver(n) und aus Trägergas auszugeben,
- mindestens ein erstes Proportionalventil (59), das einen Eingang (61), der an die erste Quelle (25) angeschlossen ist, um den ersten Strom (27) aufzunehmen, einen ersten Ausgang (63), um selektiv einen Volumenprozentsatz X1 des ersten Stroms (27) zu der Ausgangsverbindung (49) zu leiten, und einen zweiten Ausgang (65), der geeignet ist, einen Volumenprozentsatz 100-X1 des ersten Stroms (27) auszugeben, beinhaltet, wobei der Prozentsatz X1 zwischen 0 % und 100 % beträgt und für eine Einstellung des ersten Proportionalventils (59) repräsentativ ist,
- ein Anpassungsproportionalventil (75), das einen Eingang (77), der an die Trägergasquelle (33) über eine erste Verbindungsleitung (G0) angeschlossen ist, um mindestens einen Anteil des Anpassungsträgergasstroms (35) aufzunehmen, einen ersten Ausgang (79), der geeignet ist, einen Volumenprozentsatz Y des Anteils auszugeben, und einen zweiten Ausgang (81), der geeignet ist, einen Volumenprozentsatz 100-Y des Anteils auszugeben, beinhaltet, wobei der Prozentsatz Y zwischen 0 % und 100 % beträgt und für eine Einstellung des Anpassungsproportionalventils (59) repräsentativ ist, und
- ein Steuerungssystem (21), das geeignet ist, mindestens das erste Proportionalventil (59) und das Anpassungsproportionalventil (75) zu steuern, und dazu ausgestaltet ist, dass der Strom (23) aus Pulver(n) und Trägergas einen Volumenstrom hat, der im Wesentlichen gleich dem gegebenen Volumenstrom (V0) ist, wobei die Vorrichtung (11; 111) ferner umfasst:
- mindestens ein erstes Rückführungssystem (RA), um mindestens einen Teil des ersten Stroms (27) zurückzuführen, und
- mindestens eine erste Rückführungsverbindung (51), die, stromaufwärts, mit dem zweiten Ausgang (65) des ersten Proportionalventils (59) verbunden ist, um den Prozentsatz 1-X1 des ersten Stroms (27) aufzunehmen, und mit dem ersten Ausgang (79) des Anpassungsproportionalventils (75), um den Prozentsatz Y des Anteils aufzunehmen, und, stromabwärts, mit einem Eingang (53) des ersten Rückführungssystems (RA), wobei das Steuerungssystem (21) dazu ausgestaltet ist, dass der Eingang (53) des ersten Rückführungssystems (RA) einen Volumenstrom aufnimmt, der im Wesentlichen gleich dem gegebenen Volumenstrom (V0) ist, und die Vorrichtung (11; 111) **dadurch gekennzeichnet ist, dass** sie ein Saug- und Filtersystem (41) umfasst, das an einen Ausgang des ersten Rückführungssystems (RA) angeschlossen ist, und ein Glied (43) zur Regelung eines Druckverlustes zwischen dem ersten Rückführungssystem (RA) und dem Saug- und Filtersystem (41),
wobei das Regelglied (43) dazu geeignet ist, dass ein Druck (PO) in der Ausgangsverbindung (49) und ein Druck (PA) in der ersten Rückführungsverbindung (51) im Wesentlichen gleich sind.

2. Vorrichtung (11; 111) nach Anspruch 1, wobei das erste Proportionalventil (59) und das Anpassungsproportionalventil (75) jeweils einen inneren Diffusor (91) und eine in Bezug auf den Diffusor (91) drehbewegliche Weiche (93) aufweist, um jeweils:
- den ersten Strom (27) in den Prozentsatz X1 und den Prozentsatz 100-X1 und
- den Anteil des Anpassungsträgergasstroms (35) in den Prozentsatz Y und den Prozentsatz 100-Y
zu teilen.

3. Vorrichtung (111) nach einem der Ansprüche 1 oder 2, wobei die Ausgangsverbindung (49) ferner mit dem zweiten Ausgang (81) des Anpassungsproportionalventils (75) verbunden ist, um den Volumenprozentsatz (100-Y) des Anteils aufzunehmen,
wobei die Vorrichtung (11; 111) dazu ausgestaltet ist, dass der Prozentsatz X1 und der Prozentsatz Y im Wesentlichen gleich sind und dass der Anteil gleich 100 % ist.

4. Vorrichtung (11; 111) nach einem der Ansprüche 1 bis 3, ferner umfassend:
- eine zweite Quelle (29), die geeignet ist, einen zweiten Strom (31) abzugeben, der ein zweites Pulver (B), das vom ersten Pulver (A) verschieden ist, und ein Trägergas (G2) beinhaltet, mit einem Volumenstrom von im Wesentlichen gleich dem gegebenen Volumenstrom (67), und
- ein zweites Proportionalventil (67), das einen Eingang (69), der an die zweite Quelle (29) angeschlossen ist, um den zweiten Strom (31) aufzunehmen, einen ersten Ausgang (71), der geeignet ist, selektiv einen Volumenprozentsatz X2 des zweiten Stroms (31) zur Ausgangsverbindung (49) zu leiten, und einen zweiten Ausgang (73), der geeignet ist, einen Volumenprozentsatz 100-X2 des zweiten Stroms (31) auszugeben, beinhaltet, wobei der Prozentsatz X2 zwischen 0 % und 100 % beträgt und für eine Einstellung des zweiten Proportionalventils (67) repräsentativ ist,
wobei das Steuerungssystem (21) ferner geeignet ist, das zweite Proportionalventil (67) zu steuern.

5. Vorrichtung (11, 111) nach Anspruch 4, ferner umfassend:
- ein zweites Rückführungssystem (RB), um mindestens einen Teil des zweiten Stroms (31) zurückzuführen, und
- eine zweite Rückführungsverbindung (55), die, stromaufwärts, mit dem zweiten Ausgang (73) des zweiten Proportionalventils (67) verbunden ist, um den Prozentsatz 100-X2 des zweiten Stroms (31) aufzunehmen, und mit dem zweiten Ausgang (81) des Anpassungsproportionalventils (75), um den Prozentsatz Y des Anteils aufzunehmen, und, stromabwärts, mit einem Eingang (57) des zweiten Rückführungssystems (RB), wobei das Steuerungssystem (21) dazu ausgestaltet ist, dass der Eingang (57) des zweiten Rückführungssystems (RB) einen Volumenstrom aufnimmt, der im Wesentlichen gleich dem gegebenen Volumenstrom (V0) ist.

6. Vorrichtung (11; 111) nach Anspruch 5, wobei das Steuerungssystem (21) dazu ausgestaltet ist, dass der Prozentsatz Y im Wesentlichen gleich der Summe aus den Prozentsätzen X1 und X2 ist und dass der Anteil gleich 100 % ist.

7. Vorrichtung (11; 111) nach einem der Ansprüche 1 bis 2, 4 und 5, umfassend eine zweite Verbindungsleitung (G4), die die erste Verbindungsleitung (G0) mit der Ausgangsverbindung (49) verbindet, um an der Ausgangsverbindung (49) einen Anteil des Anpassungsträgergasstroms (35) abzugeben.

8. 3D-Drucker (1) durch Zerstäubung eines oder mehrerer Pulver (A, B), umfassend:
- eine Vorrichtung (11; 111) nach einem der Ansprüche 1 bis 7 und
- mindestens eine Düse (15), um den Strom (23) aus Pulver(n) und aus Trägergas auszustoßen.

## Claims

1. - Device (11; 111) for metering one or more powders (A, B) in order to produce a flow (23) of powder(s) and of a carrier gas at a given volume flow rate (V0), the device (11; 111) comprising:
- at least a first source (25) adapted to supply a first flow (27) including a first powder (A) and a first carrier gas (G1) at a volume flow rate substantially equal to the given volume flow rate (V0),
- a source (33) of a carrier gas adapted to supply an adjustment carrier gas flow (35) at a volume flow rate substantially equal to the given volume flow rate (V0),
- an outlet junction (49) for sending said flow (23) of powder(s) and of carrier gas,
- at least a first proportional valve (59) including an inlet (61) connected to the first source (25) to receive the first flow (27), a first outlet (63) for selectively sending a volume percentage X1 of the first flow (27) to the outlet junction (49), and a second outlet (65) adapted to send a volume percentage 100-X1 of the first flow (27), the percentage X1 being between 0% and 100% inclusive and representative of a setting of the first proportional valve (59),
- an adjustment proportional valve (75) including an inlet (77) connected to said source (33) of carrier gas by a first connecting line (G0) to receive at least a fraction of the adjustment carrier gas flow (35), a first outlet (79) adapted to send a volume percentage Y of said fraction, and a second outlet (81) adapted to send a volume percentage 100-Y of said fraction, the percentage Y being between 0% and 100% inclusive and representative of a setting of the adjustment proportional valve (59), and
- a control system (21) adapted to control at least the first proportional valve (59) and the adjustment proportional valve (75) and configured so that the flow (23) of powder(s) and of carrier gas has a volume flow rate substantially equal to the given volume flow rate (V0),
the device (11; 111) further comprising :
- at least a first recycling system (RA) for recycling at least a part of the first flow (27), and
- at least a first recycling junction (51) connected, upstream, to the second outlet (65) of the first proportional valve (59) to receive the percentage 1 -X1 of the first flow (27) and to the first outlet (79) of the adjustment proportional valve (75) to receive the percentage Y of said fraction and, downstream, to an inlet (53) of the first recycling system (RA),
the control system (21) being configured so that the inlet (53) of the first recycling system (RA) receives a volume flow rate substantially equal to the given volume flow rate (V0),
and the device (11; 111) being **characterized in that** it includes an aspiration and filtration system (41) connected to an outlet of the first recycling system (RA) and a member (43) for regulating a head loss between the first recycling system (RA) and the aspiration and filtration system (41),
the regulator member (43) being adapted so that a pressure (PO) in the outlet junction (49) and a pressure (PA) in the first recycling junction (51) are substantially equal to one another.

2. - Device (11; 111) according to Claim 1, in which the first proportional valve (59) and the adjustment proportional valve (75) each include an internal diffuser (91) and a switch (93) mobile in rotation relative to the diffuser (91), respectively to divide:
- the first flow (27) into the percentage X1 and the percentage 100-X1, and
- the fraction of the adjustment carrier gas flow (35) into the percentage Y and the percentage 100-Y.

3. - Device (111) according to one of Claims 1 or 2, in which the outlet junction (49) is moreover connected to the second outlet (81) of the adjustment proportional valve (75) to receive the volume percentage (100-Y) of said fraction,
the device (11; 111) being configured so that the percentage X1 and the percentage Y are substantially equal to one another and said fraction is equal to 100%.

4. - Device (11; 111) according to any one of Claims 1 to 3, further including:
- a second source (29) adapted to supply a second flow (31) including a second powder (B) distinct from the first powder (A) and a carrier gas (G2) at a volume flow rate substantially equal to the given volume flow rate (67), and
- a second proportional valve (67) including an inlet (69) connected to the second source (29) to receive the second flow (31), a first outlet (71) adapted selectively to send a volume percentage X2 of the second flow (31) to the outlet junction (49) and a second outlet (73) adapted to send a volume percentage 100-X2 of the second flow (31), the percentage X2 being between 0% and 100% inclusive and representative of a setting of the second proportional valve (67),
the control system (21) being further adapted to control the second proportional valve (67).

5. - Device (11; 111) according to claim 4, further comprising:
a second recycling system (RB) for recycling at least a part of the second stream (31), and
- a second recycling junction (55) connected, upstream, to the second outlet (73) of the second proportional valve (67) to receive the percentage 100-X2 of the second flow (31) and to the second outlet of (81) the proportional adjustment valve (75) to receive the proportion Y of said fraction and, downstream, to an inlet (57) of the second recycling system (RB),
the control system (21) being configured so that the inlet (57) of the second recycling system (RB) receives a volume flow rate substantially equal to the given volume flow rate (V0).

6. - Device (11; 111) according to claim 5, wherein the control system (21) is configured so that the percentage Y is substantially equal to the sum of the percentages X1 and X2 and said fraction is equal to 100%.

7. - Device (11; 111) according to any one of claims 1 to 2, 4 and 5, including a second line (G4) connecting the first connecting line (G0) to the outlet junction (49) to deliver to the outlet junction (49) a fraction of the adjustment carrier gas flow (35).

8. - 3D printer (1) spraying one or more powder(s) (A, B), including:
- a device (11; 111) according to any one of Claims 1 to 7, and
- at least one nozzle (15) for ejecting said flow (23) of powder(s) and vector gas.
